# EUROPÄISCHE PATENTANMELDUNG

(11) **EP 1 043 263 A2**
(43) Veröffentlichungstag der Anmeldung: **11.10.2000**
(21) Anmeldenummer: 00250108.8
(22) Anmeldetag: 31.03.2000
(51) Int. Cl.: B66D 3/22, B66D 1/20

(54) **Antrieb für ein Windwerk, insbesondere für ein Hubwerk eines Hebezeugs**

(30) Priorität: 01.04.1999 DE 19916413
(71) Anmelder: MANNESMANN Aktiengesellschaft, 40213 Düsseldorf (DE)
(72) Erfinder: Gersemsky, Udo Dipl.-Ing., 58313 Herdecke (DE); Flaig, Heinz Dipl.-Ing, 44801 Bochum (DE); Heun, Jürgen, 44379 Dortmund (DE); Eising, Ralf Dipl.-Ing., 44627 Herne (DE)
(74) Vertreter: Meissner, Peter E., Dipl.-Ing.

(57) **Zusammenfassung**

Die Erfindung betrifft einen Antrieb für ein Windwerk, insbesondere ein Hubwerk eines Hebezeugs, das ein an einem Tragmittel befestigtes Lastaufnahmemittel aufweist, mit einem Elektromotor, der antriebstechnisch verbunden ist mit einem ein Antriebselement für das Tragmittel antreibenden Getriebe. Um einen Antrieb, insbesondere für ein Hubwerk eines Hebezeugs, für Lasten bis ca. 100 Kg zu schaffen, der kostengünstig herstellbar ist, wird vorgeschlagen, dass der Elektromotor ein nur motorisch und nicht generatorisch betreibbarer Gleich- und/oder Wechselstrommotor und das Getriebe ein selbsthemmendes Schneckengetriebe (7) ist.

## Beschreibung

Die Erfindung betrifft einen Antrieb für ein Windwerk, insbesondere für ein Hubwerk eines Hebezeugs, gemäß dem Oberbegriff des Anspruchs 1.

Es ist unter anderem aus der EP 647 586 B1 bekannt, Hubwerke von Hebezeugen mit Asynchronmotoren als langlebige verschleißarme Antriebsmotoren zu versehen. Dabei ist der Asynchronmotor antriebstechnisch mit einer Trommel verbunden, auf die ein Seil als Tragmittel auf- und abwickelbar ist. Am unteren Ende des Seils ist ein Lastaufnahmemittel, beispielsweise ein Haken, für die Aufnahme einer Last vorsehbar. Die Verbindung Asynchronmotor-Trommel erfolgt häufig mittels eines zwischengeschalteten Getriebes.

Der Asynchronmotor kann insbesondere als Kurzschlussläufermotor ausgebildet sein, der motorisch und generatorisch betreibbar ist. Seine Drehzahl ist dabei relativ unabhängig von der Drehrichtung und der Größe der Last. Beim Senken der Last, d. h. bei von der Last angetriebenem Motor, wird darüber hinaus selbsttätig ein erwünschtes Bremsmoment erzeugt.

Der Nachteil der bekannten Lösungen sind die relativ hohen Kosten des Antriebs, insbesondere wenn es sich bei dem Hebezeug um ein Kleinsthebezeug für Lasten bis ca. 100 kg handelt.

Aufgabe der Erfindung ist es, einen Antrieb für ein Windwerk, insbesondere für ein Hubwerk eines Hebezeugs, vorzuschlagen, das bis ca. 100 kg einsetzbar und kostengünstig herstellbar ist.

Die Lösung dieser Aufgabe ist durch die im Anspruch 1 angegebenen Merkmale gegeben. Durch die kennzeichnenden Merkmale der Unteransprüche ist der Antrieb in vorteilhafter Weise weiterausgestaltet.

Die Lösung sieht vor, dass der Elektromotor ein nur motorisch, also nicht generatorisch, betreibbarer Gleich- und/oder Wechselstrommotor und das Getriebe ein selbsthemmendes Schneckengetriebe ist. Ein derartiger Elektromotor ist beispielsweise der Universalmotor, d. h. ein Kommutator-Reihenschluß-Motor, dessen Motorwicklungen bei Betrieb in Reihe geschaltet sind. Der Universalmotor ist konstruktiv einfach aufgebaut und sehr preisgünstig herstellbar. Der fehlende Generatorbetrieb wird insbesondere bei Verwendung in einem Hebezeug durch die Selbsthemmung des ebenfalls kostengünstigen Schneckengetriebes ausgeglichen. Der Universalmotor wird dabei durch das Schneckengetriebe praktisch mit einem ständig wirksamen Bremsmoment betrieben, das mit zunehmender Drehzahl der Schnecke abnimmt; bei Stillstand der Schnecke ist die Selbsthemmung am größten. Die Selbsthemmung wird zweckmäßigerweise so groß gewählt, dass sie beim Einsatz des Antriebs in einem Hebezeug ausreicht, um auch die größte zulässige Last noch sicher zu halten.

Um den Elektromotor bei optimaler Leistung betreiben zu können, d. h. im Drehzahlbereich weit über 5000 Umdrehungen pro Minute, wird vorgeschlagen, dass der hochtourig betriebene Universalmotor und das selbsthemmende Schneckengetriebe über einen die Motordrehzahl reduzierenden Riementrieb miteinander verbunden sind, der eine motorseitige und getriebeseitige Riemenscheibe sowie einen über beide Riemenscheiben geführten endlosen Riemen aufweist, welcher jeweils mit den Mantelflächen der beiden Riemenscheiben einen Reibschluss bildet. Auf diese Weise kann das Schneckengetriebe unterhalb von 5000 Umdrehungen pro Minute betrieben werden, was technologisch bedingt der sichere Betriebsbereich des Schneckengetriebes ist. Das Schneckengetriebe sichert im Falle eines Riemenbruchs das sichere Halten der Last, so dass der Riementrieb in einem Hebezeug einsetzbar ist.

Um den Reibschluss zu verbessern, wird die unbelastete Riementrommel mittels einer Spannrolle vorgespannt, die kraftbeaufschlagt an dieser anliegt. Die Vorspannung ist hierbei so gewählt, dass der Riemen bei extremer Überlastung durchrutscht und so der gesamte Antriebsstrang geschützt ist.

Die Leistungsfähigkeit des Riementriebs lässt sich verbessern, wenn der flache Riemen eine profilierte Unterseite mit mehreren beabstandeten in Riemenlängsrichtung verlaufenden V-förmigen vorsprungartigen Verdickungen aufweist, die in korrespondierende Vertiefungen eingreifen, welche in der Mantelfläche der motorseitigen Riemenscheibe ausgebildet sind. Hierbei treten zusätzlich Keilwirkungskräfte auf, die den Kraftschluss verstärken.

Um den Riemen bei Überlastung gezielt nur auf der getriebeseitigen Riemenscheibe durchrutschen zu lassen, wird vorgeschlagen, dass die getriebeseitige Riemenscheibe als Mantelfläche einer Zylinderfläche ohne Vertiefungen aufweist.

Um ohne Spannrolle für das unbelastete Riementrum auszukommen, wird die Länge des elastischen Riemens kleiner als der Linienzug gewählt, der sich aus dem Achsabstand und dem Durchmesser der beiden Riemenscheiben ergibt. Mit anderen Worten: der Abstand der Riemenscheiben wird so gewählt, dass der elastische Riemen jeweils mit einer Vorspannung versehen über die Riemenscheiben läuft.

Wenn die Anforderungen an das Halten der Last bei Riemenbruch aufgrund von Sicherheitsvorschriften besonders hoch sind, wird vorgeschlagen, dass eine Stützrolle im Bereich des auf der Zylinderfläche aufliegenden Riemens auf dessen Oberseite abrollt, wobei der Riemen als Abstandshalter dient, dass die Stützrolle an einem Ende eines aus einer Bereitschaftsstellung in eine Bremsstellung verschwenkbaren Bremshebels frei drehbar gelagert ist, und dass der mit einem Bremselement verbundene Bremshebel bei fehlendem Abstandshalter federkraftbeaufschlagt selbsttätig zur Stützrolle hin in eine Bremsstellung geschwenkt ist, in der er das Bremselement gegen die Zylindermantelfläche drückt, wobei das Bremselement die Riemenscheibe reibschlüssig festhält. Der Antrieb ist bei dieser Ausgestaltung neben der selbsthemmenden Schnecke zusätzlich mit einer Sicherheitsbremse versehen, die selbsttätig erfasst, ob ein Riemenbruch vorliegt und bei gebrochenem Riemen die getriebeseitige Riemenscheibe abbremst und anschließend die Last hält.

Ein Ausführungsbeispiel der Erfindung ist in der Zeichnung dargestellt und wird nachfolgend näher beschrieben. Es zeigen:
- Fig. 1: Hebezeug mit einem Schneckengetriebe und einem Riementrieb,
- Fig. 2: den Riementrieb mit den beiden Riemenscheiben gemäß Fig. 1 in einer perspektivischen Darstellung und
- Fig. 3: einen Abschnitt des Riemens gemäß Fig. 1 und Fig. 2.

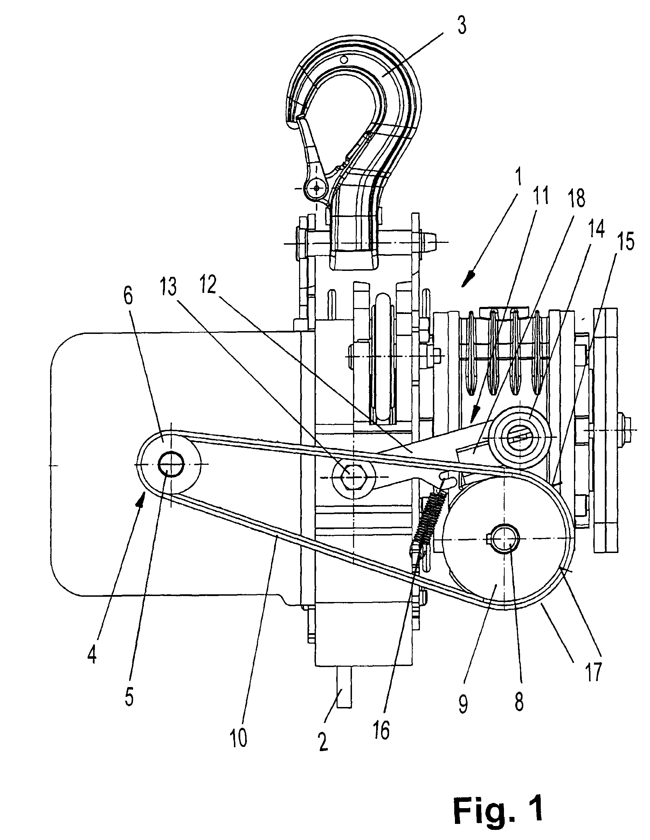

Fig. 1 zeigt ein tragbares kompaktes, speziell für Lasten bis ca. 100 kg ausgelegtes Hebezeug 1 mit einem Hubwerk, das ein heb- und senkbares Seil 2 als Tragmittel aufweist. Am Seil 2 ist unten ein nicht gezeigtes Lastaufnahmemittel befestigt.

Mittels eines Hakens 3 ist das gesamte Hebezeug 1 an einem Träger, Fahrwerk und dgl. befestigbar.

Der Antrieb des Hubwerks verfügt über einen Universalmotor 4, der zu den Komutator-Reihenschluss-Motoren gehört, bei denen alle Motorwicklungen, also die Rotorwicklung und die Statorwicklungen, bei Motorbetrieb in Reihe geschaltet sind. Diese Motoren sind nicht permanent erregt, da sie keine Dauermagnete enthalten. Aus diesem Grund sind sie nicht generatorisch betreibbar, d. h. sie geben bei Generatorbetrieb keine elektrische Leistung ab, die zur Bremsung des Motors durch Kurzschließen der in Reihe geschalteten Motorwicklungen in Wärme umwandelbar ist. Eine generatorische Betriebsweise liegt bei einem Hebezeug 1 vor, wenn der Motor bei abzusenkender Last von dieser angetrieben wird.

Der Universalmotor 4 besitzt eine drehgelagerte Motorwelle 5, auf deren einem Ende eine drehfest angeordnete Riemenscheibe 6 sitzt. Neben dem Universalmotor 4 ist parallel zu diesem ein Schneckengetriebe 7 angeordnet, deren Welle 8 ein weitere Riemenscheibe 9 trägt. Beide Riemenscheiben 6, 9 liegen in einer gemeinsamen Ebene und sind über einen endlosen Riemen 10 miteinander verbunden. Die Motorwelle 5 und die Welle 8 verlaufen dabei parallel zueinander. Wie Fig. 1 erkennen lässt, ist der Durchmesser der motorseitigen Riemenscheibe 6 kleiner als die getriebeseitige Riemenscheibe 9. Der Riementrieb reduziert folglich jeweils die Motordrehzahl, um den Drehzahlbereich des Universalmotors 4 an den des Schneckengetriebes 7 optimal anzupassen.

Das Schneckengetriebe 7 ist selbsthemmend, wobei die Selbsthemmung bei Betrieb des Hebezeugs 1 wie eine ständig eingeschaltete "Bremse" wirksam ist. Die Bremswirkung ist bei Stillstand der Schnecke am größten; sie verringert sich mit zunehmender Schneckendrehzahl. Die Selbsthemmung des Schneckengetriebes 7 ist so gewählt, dass die Selbsthemmung bei Bruch des Riemens 10 einen Absturz der Last verhindert. Zumindest reicht die Selbsthemmung aus, um die Last nur langsam nach unten sinken zu lassen.

Um auch höheren Sicherheitsanforderungen zu genügen, weist der Antrieb des Hubwerks eine zusätzliche Sicherheitsbremse 11 auf, die aus einem Bremshebel 12 besteht, der um eine Achse 13 verschwenkbar ist. Am anderen freien Ende des Bremshebels 12 ist eine Stützrolle 14 frei drehbar gelagert. Die Schwenkachse 13 und die Achse 13 der Stützrolle 14 verlaufen parallel zueinander als auch parallel zu den beiden Wellen 5, 8.

Die Stützrolle 14 rollt auf der Oberseite 15 des Riemens 10 aufliegend auf diesem ab. Dabei wird die Stützrolle 15 mittels einer am Bremshebel 12 angreifenden Feder 16 gegen den Riemen 10 gedrückt, wobei die Stützrolle 14 in dem Bereich an dem Riemen 10 anliegt, in dem dieser auf der Zylinderfläche 17 der Riemenscheibe 9 unter Bildung eines Reibschlusses aufliegt. Der Riemen 10 sorgt dafür, dass die Stützrolle 14 einen vorgegebenen Abstand von der Riemenscheibe 9 nicht unterschreitet; er hat hierbei die Funktion eines Abstandshalters.

Bei einem Bruch des Riemens 10 wird der Auflagebereich der Stützrolle 14 freigegeben, so dass der federkraftbeaufschlagte Bremshebel 12 aus seiner Bereitschaftsstellung in eine Bremsstellung verschwenkt. In der Bremsstellung wird ein am Bremshebel 12 angeordneter Bremsklotz 18 gegen die Zylinderfläche 17 der Riemenscheibe 9 gedrückt und diese bis zu ihrem Stillstand abgebremst. Bei stillstehender Schnecke des Schneckengetriebes 7 wird die Last durch den Bremsklotz 18 reibschlüssig gehalten.

Die Länge des hochelastischen Riemens 10 ist kleiner als der geschlossene Linienzug gewählt, der sich aus dem Achsabstand und dem Durchmesser der beiden Riemenscheiben 6, 9 ergibt, so dass der Riemen 10 vorgespannt eingesetzt ist. Alternativ kann das unbelastete Riementrum auch mittels einer kraftbeaufschlagt an diesem anliegenden Spannrolle vorspannbar sein, allerdings mit höherem Aufwand.

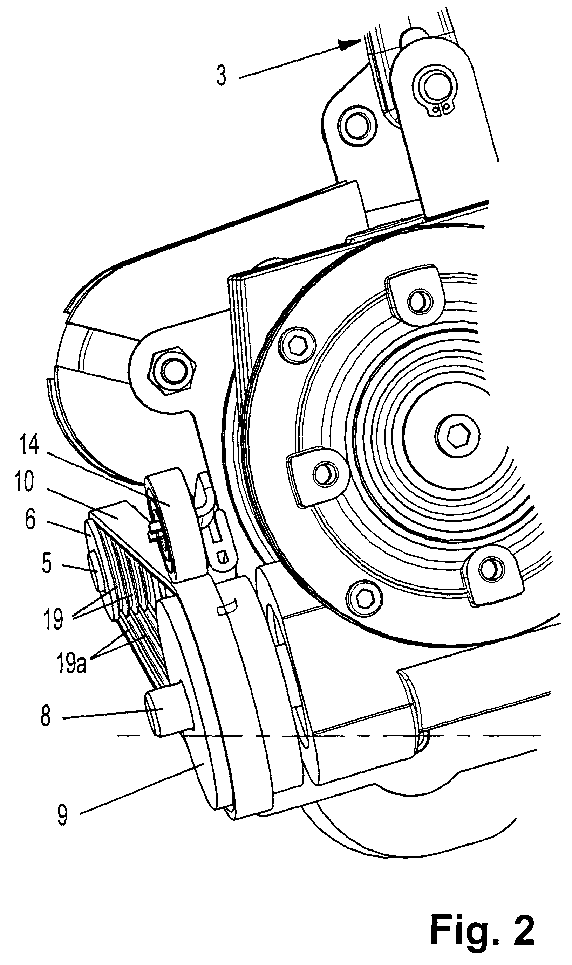

Fig. 2 zeigt den Riementrieb mit den beiden Riemenscheiben 9, 6 bezogen auf Fig. 1 seitlich von hinten gesehen. So lässt Fig. 2 erkennen, dass die Zylinderfläche 17 keine Vertiefung aufweist, während die motorseitige Riemenscheibe 6 mit V-förmigen radialen Vertiefungen 19 versehen ist, die parallel nebeneinander in die Mantelfläche dieser Riemenscheibe 6 eingeformt sind. Der Riemen 10 ist auf seiner Unterseite entsprechend profiliert; er ist dort mit mehreren beabstandeten in Riemenlängsrichtung verlaufenden korrespondierenden V-förmigen vorsprungartigen Verdickungen 19a versehen, die in die Vertiefungen 19 der Riemenscheibe 6 korrespondierend eingreifen. Auf diese Weise wird eine sichere Kraftübertragung von der kleineren Riemenscheibe 6 zunächst auf den Riemen 10 sichergestellt. Bei Überlastung rutscht der Riemen 10 dagegen auf der Zylinderfläche 17 der Riemenscheibe 9 durch.

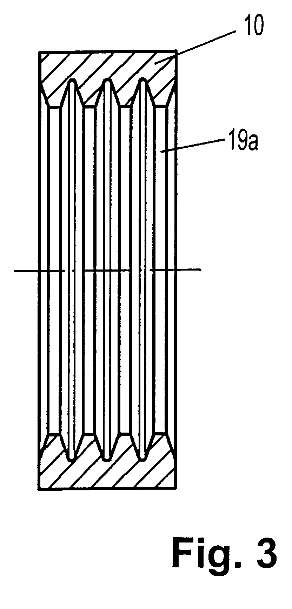

Fig. 3 zeigt einen Abschnitt des Riemens 10 mit den V-Nuten 19.

### Bezugszeichenliste:

- 1: Hebezeug
- 2: Seil
- 3: Haken
- 4: Universalmotor
- 5: Motorwelle
- 6: Riemenscheibe (motorseitig)
- 7: Schneckengetriebe
- 8: Welle
- 9: Riemenscheibe (getriebeseitig)
- 10: Riemen (endlos)
- 11: Sicherheitsbremse
- 12: Bremshebel
- 13: Achse
- 14: Stützrolle
- 15: Oberseite des Riemens
- 16: Feder
- 17: Zylinderfläche
- 18: Bremsklotz
- 19: Vertiefungen
- 19a: Verdickungen

## Patentansprüche

1. Antrieb für ein Windwerk, insbesondere ein Hubwerk eines Hebezeugs, das ein an einem Tragmittel befestigtes Lastaufnahmemittel aufweist, mit einem Elektromotor, der antriebstechnisch verbunden ist mit einem ein Antriebselement für das Tragmittel antreibenden Getriebe,
**dadurch gekennzeichnet,**
dass der Elektromotor ein nur motorisch und nicht generatorisch betreibbarer Gleich- und/oder Wechselstrommotor und das Getriebe ein selbsthemmendes Schneckengetriebe (7) ist.

2. Antrieb nach Anspruch 1,
**dadurch gekennzeichnet,**
dass der Elektromotor ein Universalmotor (4) bzw. Kommutator-Reihenschluß-Motor mit bei Betrieb in Reihe geschalteten Motorwicklungen ist.

3. Antrieb nach Anspruch 2,
**dadurch gekennzeichnet,**
dass der hochtourig betriebene Universalmotor (4) und das Schneckengetriebe (7) über einen die Motordrehzahl reduzierenden Riementrieb miteinander verbunden sind, der eine motorseitige und getriebeseitige Riemenscheibe (6, 9) sowie einen über beide Riemenscheiben (6, 9) geführten endlosen Riemen (10) aufweist, der jeweils mit den Mantelflächen der beiden Riemenscheiben (6, 9) einen Reibschluss bildet.

4. Antrieb nach einem der Ansprüche 1- 3,
**dadurch gekennzeichnet,**
dass das unbelastete Riementrum mittels einer kraftbeaufschlagt an diesem anliegenden Spannrolle vorspannbar ist.

5. Antrieb nach einem der Ansprüche 1- 4,
**dadurch gekennzeichnet,**
dass der flache Riemen (10) eine profilierte Unterseite mit mehreren beabstandeten in Riemenlängsrichtung verlaufenden v-förmigen vorsprungartigen Verdickungen (19a) aufweist, die in korrespondierende Vertiefungen eingreifen, welche in der Mantelfläche der motorseitigen Riemenscheibe (6) ausgebildet sind.

6. Antrieb nach einem der Ansprüche 1- 5,
**dadurch gekennzeichnet,**
dass die getriebeseitige Riemenscheibe (9) als Mantelfläche eine Zylinderfläche (17) ohne Vertiefungen aufweist.

7. Antrieb nach einem der Ansprüche 1 - 6,
**dadurch gekennzeichnet,**
dass die Länge des hochelastischen Riemens (10) kleiner als der Linienzug ist, der sich aus dem Achsabstand und dem Durchmesser der beiden Riemenscheiben (6, 9) ergibt.

8. Antrieb nach einem der Ansprüche 1- 7,
**dadurch gekennzeichnet,**
dass eine Stützrolle (14) im Bereich des auf der Zylinderfläche (17) aufliegenden Riemens (10) auf dessen Oberseite abrollt, wobei der Riemen (10) als Abstandshalter dient,
dass die Stützrolle (14) an einem Ende eines aus einer Bereitschaftsstellung in eine Bremsstellung verschwenkbaren Bremshebels (12) frei drehbar gelagert ist, und
dass der mit einem Bremselement verbundene Bremshebel (12) bei fehlendem Abstandshalter federkraftbeaufschlagt selbsttätig zur Stützrolle (14) hin in eine Bremsstellung geschwenkt ist, in der er das Bremselement (18) gegen die Zylindermantelfläche (17) drückt, wobei das Bremselement (18) die Riemenscheibe (6, 9) reibschlüssig festhält.
